# EUROPÄISCHE PATENTSCHRIFT

(11) **EP 2 657 005 B1**
(45) Veröffentlichungstag und Bekanntmachung des Hinweises auf die Patenterteilung: **25.06.2014**
(21) Anmeldenummer: 12003000.2
(22) Anmeldetag: 27.04.2012
(51) Int. Cl.: B29C 65/00, B65B 51/10, B65B 51/14, B08B 5/02

(54) **Abblasbaugruppe für eine Siegeleinheit einer Verpackungsvorrichtung**
Blow off group for a sealing unit of a packaging apparatus
Groupe de soufflage pour une unité d'étanchéité d'un appareil d'emballage

(43) Veröffentlichungstag der Anmeldung: 30.10.2013
(73) Patentinhaber: MULTIVAC Sepp Haggenmüller GmbH & Co KG, 87787 Wolfertschwenden (DE)
(72) Erfinder: Häring, Rainer, 87761 Lauben (DE); Scheufele, Thomas, 87746 Erkheim (DE)
(74) Vertreter: Grünecker, Kinkeldey, Stockmair & Schwanhäusser

(56) Entgegenhaltungen:
- DE-B3-102008 015 691
- US-A- 3 699 742

## Beschreibung

Die vorliegende Erfindung bezieht sich auf eine Abblasbaugruppe für eine Siegeleinheit einer Verpackungsvorrichtung mit den technischen Merkmalen des Anspruchs 1 sowie auf ein Verfahren zum Beseitigen eines überschüssigen Verpackungsmaterials mit den technischen Merkmalen des Anspruchs 14.

Aus der DE 10 2008 015 691 B3 der Anmelderin, deren Inhalt hiermit durch Bezugnahme gänzlich einbezogen ist, sind eine Vorrichtung und ein Verfahren zum Verpacken von Produkten in Beuteln bekannt. Darin wird offenbart, dass ein Deckel im Anschluss an einen Siegelungprozess und an einen Schneidprozess angehoben wird, um einen Spalt zunächst teilweise zu einem Abzug zu öffnen, wobei abgeschnittene Beutelhälse mittels einer in der Kammerbandmaschine vorgesehenen Druckluftvorrichtung durch den Spalt in den Abzug geblasen werden. Um einen Abtransport der abgeschnittenen Beutelhälse in den Abzug zu verbessern, ist zusätzlich eine Absaugvorrichtung im Abzug vorgesehen. Durch das Anheben des Deckels kann mittels eines Mitnehmers ein Rahmenelement der Kammerbandmaschine angehoben werden, um den Spalt zum Abzug komplett zu öffnen. Dadurch ist es möglich, durch den vergrößerten Spalt auch längere Beutelhälse abzuführen.

Problematisch ist allerdings, dass die abgetrennten Beutelhälse schwer durch die in der Kammerbandmaschine vorgesehene Druckluftvorrichtung sowie durch die zusätzlich vorgesehene Absaugvorrichtung vom Widerlager entfernbar sind. Vor allem hat es sich in der Praxis herausgestellt, dass Beutelhälse zeitweise am Widerlager hängen bzw. kleben bleiben, wodurch es zu einer unerwünschten Anhäufung von abgetrennten Beutelhälsen am Widerlager in der Kammerbandmaschine kommt. Schlimmstenfalls kann es sein, dass der Spalt zum Abzug verstopft, wodurch das Risiko besteht, dass sich die Kammerbandmaschine zum Evakuieren bzw. zum Begasen nicht mehr luftdicht abgeschlossen werden kann.

Außerdem ist es schwer zu realisieren, eine Druckluftvorrichtung derart in der Kammerbandmaschine vorzusehen, dass sich durch sie die überschüssigen Beutelhälse vom Widerlager gezielt durch den Spalt in den Abzug blasen lassen.

Folgerichtig liegt der vorliegenden Erfindung die Aufgabe zugrunde, eine Vorrichtung bzw. ein Verfahren mittels einfacher, kostengünstiger technischer Merkmale zu schaffen, wodurch sich eine Beutelrestentfernung insbesondere bei Kammerbandmaschinen optimieren lässt.

Diese Aufgabe wird gelöst mit den technischen Merkmalen des Anspruchs 1 bzw. durch die technischen Merkmale des Verfahrensanspruchs 13. Verbesserte Weiterbildungen der Erfindung sind durch die technischen Merkmale der Unteransprüche gegeben.

Die Erfindung betrifft eine Abblasbaugruppe für eine Siegeleinheit einer Verpackungsvorrichtung, umfassend ein Gehäuse und mindestens ein Abblaselement. Erfindungsgemäß ist vorgesehen, dass das Abblaselement relativ zum Gehäuse zwischen einer ersten Position, in der es zumindest teilweise in dem Gehäuse versenkt ist, und einer zweiten Position bewegbar ist, in der es zumindest teilweise über eine Oberfläche des Gehäuses hinausragt.

Die erfindungsgemäße Abblasbaugruppe bietet eine einfache und kostengünstige Lösung, um überschüssiges Verpackungsmaterial, wie beispielsweise abgetrennte Beutelhälse, zuverlässig abzutransportieren. Außerdem bietet die Abblasbaugruppe der Erfindung eine platzsparende Lösung, die ohne erheblichen konstruktiven Aufwand in einer Verpackungsmaschine, wie beispielsweise einer Kammerbandmaschine, einsetzbar ist. Bisher verwendete Druckluftvorrichtungen und/oder Absaugvorrichtungen, wie sie aus dem eingangs zitierten Stand der Technik bekannt sind, lassen sich durch die erfindungsgemäße Abblasbaugruppe wirksam und einfach ersetzen oder ergänzen.

Vor allem hat sich die Abblasbaugruppe der Erfindung als wirksam erwiesen, um sowohl kurze als auch lange abgetrennte Beutelhälse sicher von einer Siegeleinheit zu entfernen. Die Abblasbaugruppe der Erfindung kann dies mit oder ohne Unterstützung einer zusätzlichen Druckluft- und/oder Absaugvorrichtung der eingangs beschriebenen Art tun.

Außerdem ist es durch die erfindungsgemäße Abblasbaugruppe möglich, die abgetrennten Beutelhälse innerhalb kurzer Zeit von der Abblasbaugruppe zu entfernen. Dadurch lassen sich Verpackungszeiten durch die Verpackungsvorrichtung unter Verwendung der erfindungsgemäßen Abblasbaugruppe verbessern.

Als besonders wirkungsvoll hat sich die erfindungsgemäße Abblasbaugruppe beim Abtransport von Beutelhälsen erwiesen, die besonders hartnäckig an der Abblasbaugruppe beziehungsweise an einem zu der Siegeleinheit gehörigen Widerlager nach dem Siegelund Trennvorgang hängen bleiben, beispielsweise weil sie auf einer Oberfläche des Widerlagers verkleben.

Vorzugsweise ist oder umfasst das Abblaselement eine Abblasleiste oder wenigstens einen Abblasstift. Mittels der Abblasleiste ist es möglich, die abgetrennten Beutelhälse besonders gut über die gesamte Breite der Abblasbaugruppe anzuheben, so dass sich die abgetrennten Beutelhälse zuverlässig von der Oberfläche der Abblasbaugruppe lösen. Insbesondere vorteilhaft ist die Abblasleiste dann, wenn die abgetrennten Beutelhälse teilweise an der Siegeleinheit verkleben. Ein oder mehrere Abblasstifte haben den Vorteil, dass sie durch ihr verhältnismäßig geringes Eigengewicht insbesondere reaktionsschnell aus der ersten in die zweite Position verstellbar sind.

Gemäß einer weiteren Ausführungsform der Erfindung ist vorgesehen, dass das Abblaselement bündig mit der Oberfläche des Gehäuses angeordnet ist, wenn es sich in der ersten Position befindet. Dadurch wird erreicht, dass sich das Verpackungsmaterial besonders gut über die Abblasbaugruppe schieben lässt. Insbesondere wird dadurch verhindert, dass das Verpackungsmaterial auf der Abblasbaugruppe hängen bleibt und nicht ordnungsgemäß der Siegeleinheit und/oder Schneidvorrichtung zugeführt wird.

Besonders gut kann das Verpackungsmaterial von der Oberfläche der Abblasbaugruppe gelöst bzw. gelockert werden, wenn das Abblaselement relativ zur Oberfläche des Gehäuses orthogonal verschiebbar ist. Alternativ dazu ist es möglich, dass das Abblaselement beweglich um eine Schwenkachse angeordnet ist, um zwischen der ersten und der zweiten Position geschwenkt zu werden. Dies ist insbesondere dann günstig, um ein gewichtiges Abblaselement aus der ersten in die zweite Position zu bewegen.

Vorteilhaft ist es auch, wenn in dem Gehäuse ein Führungsabschnitt ausgebildet ist, in dem das Abblaselement beweglich angeordnet ist. Durch den Führungsabschnitt ist es möglich, dem Abblaselement eine gewünschte Bewegungsrichtung vorzugeben, in der es sich zwischen der ersten und der zweiten Position bewegt. Schließlich ermöglicht es der Führungsabschnitt, dass das Abblaselement nicht während einer Bewegung zwischen der ersten und der zweiten Position verklemmt.

Um das Abblaselement besonders schnell zwischen der ersten und der zweiten Position zu bewegen, umfasst das Gehäuse einen Druckluftanschluss, durch den Druckluft in den Führungsabschnitt zuleitbar ist. Dabei kann der Druckluftanschluss zentrisch oder exzentrisch relativ zum Führungsabschnitt in dem Gehäuse vorgesehen sein. Wenn der Druckluftanschluss zentrisch relativ zum Führungsabschnitt in dem Gehäuse vorgesehen ist, kann das Abblaselement besonders gleichmäßig im Führungsabschnitt zwischen der ersten und der zweiten Position verfahren, ohne dabei zu verhaken. Durch eine exzentrische Anordnung des Druckluftanschlusses ist es möglich, auf konstruktive Rahmenbedingungen Rücksicht zu nehmen, die durch eine Verpackungsvorrichtung gegeben sind, in der die erfindungsgemäße Abblasbaugruppe zum Einsatz kommt.

Vorzugsweise weist der Führungsabschnitt eine Öffnung auf, durch die das Abblaselement hindurchragt, wenn es sich in der zweiten Position befindet. Durch die Öffnung ist es möglich, das Abblaselement im Führungsabschnitt des Geäuses zu versenken, wenn es von der zweiten in die erste Position verfährt. Außerdem kann die Öffnung derart ausgebildet sein, dass sie eine enge Führung für das Abblaselement gewährleistet, wodurch sich gleichermaßen verhindern lässt, dass Verunreinigungen durch die Öffnung in den Führungsbereich gelangen.

Um auf besonders einfache Art und Weise zu verhindern, dass sich das Abblaselement von dem Gehäuse löst, umfasst das Gehäuse mindestens einen Anschlag, der das Abblaselement an dem Gehäuse hält, wenn sich das Abblaselement in der zweiten Position befindet.

Weiterhin kann vorgesehen sein, dass das Abblaselement einen Einlass aufweist, durch den Luft in einen in dem Abblaselement vorgesehenen Kanal einleitbar ist. Durch den Einlass kann der Kanal gleichmäßig mit Druckluft gefüllt werden, um das Abblaselement reaktionsschnell und gleichmäßig im Führungsbereich aus der ersten in die zweite Position zu bringen.

Damit das Abblaselement reaktionsschnell und zuverlässig, also ohne dabei zu verklemmen, zwischen der ersten und der zweiten Position bewegbar ist, ist vorzugsweise vorgesehen, dass eine Unterseite des Abblaselements eine größere Fläche aufweist als der Einlass. Vorzugsweise umfasst das Abblaselement einen Flansch, der auf seiner unteren Seite eine größere Fläche aufweist als der Einlass. An der unteren Seite kann der Flansch gleichmäßig mit Druckluft beaufschlagt werden, sodass das Abblaselement ohne zu verklemmen im Führungsabschnitt verfahren kann. Außerdem kann die obere Seite des Flansches als Anschlag dienen, um das Abblaselement sicher an das Gehäuse zu halten, und/oder der Flansch kann ein Dichtungselement tragen.

Damit sich insbesondere nach dem Anheben des Abblaselements die überschüssigen Beutelhälse gut von der Abblasbaugruppe abtransportieren lassen, umfasst das Abblaselement vorzugsweise Luftöffnungen, durch die Luft aus dem Abblaselement strömbar ist. Vorzugsweise ist die zum Anheben des Abblaselements verwendete Druckluft erst dann durch die Luftöffnungen strömbar, wenn sich das Abblaselement in der zweiten Position befindet. Somit ist es möglich, die abgetrennten überschüssigen Beutelhälse mittels des Abblaselements zunächst mechanisch anzuheben, bevor sie mittels der aus den Luftöffnungen geströmten Druckluft von der Abblasbaugruppe weggeblasen werden.

Gemäß einer weiteren Ausführungsform der Erfindung sind die Luftöffnungen derart ausgebildet, dass der durch sie erzeugte Luftstrom in unterschiedliche Richtungen, insbesondere nach oben und/oder nach vorne weg von der Abblasbaugruppe, leitbar ist. Dadurch gelingt es, die abgetrennten Beutelhälse besonders gut von der Abblasbaugruppe wegzublasen.

Eine weitere Ausführungsform der Erfindung betrifft ein Widerlager mit einer Abblasbaugruppe nach einer der zuvor beschriebenen Art, wobei das Gehäuse der Abblasbaugruppe integral mit einer Gegendruckplatte des Widerlagers ausgebildet ist. Das Widerlager lässt sich zusammen mit der Abblasbaugruppe hervorragend bei einer Siegelvorrichtung einsetzen, um Beutelreste zuverlässig von dem Widerlager wegzublasen.

Alternativ dazu ist es möglich, dass die Abblasbaugruppe an der Gegendruckplatte des Widerlagers oder allgemein an der Siegeleinheit lösbar befestigt ist, beispielsweise mittels einer Schraubenverbindung. Dies hätte den Vorteil, dass die Abblasbaugruppe, sei es für Reinigungs- oder Reparaturzwecke, einfach und schnell von dem Widerlager entfernt werden könnte. Außerdem ließe sich dadurch nach Kundenwunsch ein bereits bestehendes Widerlager durch eine erfindungsgemäße Abblasbaugruppe nachrüsten.

Die Erfindung bezieht sich auch auf ein Verfahren zum Beseitigen eines überschüssigen Verpackungsmaterials von einer Abblasbaugruppe , die für eine in einer Verpackungsvorrichtung vorgesehene Siegeleinheit einsetzbar ist. Die Abblasbaugruppe umfasst ein Gehäuse mit einem darin beweglich angeordneten Abblaselement. Erfindungsgemäß ist vorgesehen, dass das Abblaselement mit Druckluft beaufschlagt wird, um relativ zum Gehäuse aus einer ersten Position, in der es zumindest teilweise in dem Gehäuse versenkt ist, in eine zweite Position zu verfahren, in der es zumindest teilweise über eine Oberfläche des Gehäuses ragt, so dass es das überschüssige Verpackungsmaterial anhebt. Nachdem das überschüssige Verpackungsmaterial zumindest teilweise angehoben worden ist, wird die Druckluft zumindest teilweise durch in dem Abblaselement vorgesehene Luftöffnungen ausgeströmt, um das angehobene überschüssige Verpackungsmaterial von der Abblasbaugruppe wegzublasen.

Mittels des in der Abblasbaugruppe integrierten Abblaselements lässt sich das überschüssige Verpackungsmaterial, wie beispielsweise abgetrennte Beutelhälse, zunächst von der Abblasbaugruppe durch das Anheben lockern bzw. lösen und anschließend oder gleichzeitig durch die ausströmende Druckluft wirksam wegblasen.

Vorzugsweise ist vorgesehen, dass das Abblaselement mit Druckluft beaufschlagt wird, während oder nachdem sich ein Deckel der Verpackungsvorrichtung aus einer geschlossenen Lage in eine offene Lage bewegt, um einen Spalt eines Abzugs zumindest teilweise zu öffnen. Dadurch ist es möglich, das mittels des Abblaselements abtransportierte überschüssige Verpackungsmaterial durch den Spalt in den Abzug zu befördern, aus dem es von der Verpackungsvorrichtung abführbar ist.

Gemäß einer weiteren Ausführungsform der Erfindung ist vorgesehen, dass das Abblaselement höchstens bis zu einem Zeitpunkt mit Druckluft beaufschlagt wird, zu welchem der Deckel mit einem Rahmen der Verpackungsvorrichtung in Eingriff gerät, um diesen anzuheben, so dass der Spalt komplett geöffnet wird. Dadurch wird verhindert, das überschüssige Verpackungsmaterial über den Spalt hinweg am Abzug vorbei zu blasen, wenn zusätzlich der Rahmen angehoben wird.

Alternativ ist es allerdings auch möglich, das Abblaselement auch nach einem Zeitpunkt mit Druckluft zu beaufschlagen, zu welchem der Deckel mit dem Rahmen der Verpackungsvorrichtung in Eingriff gerät, um diesen anzuheben, so dass der Spalt komplett geöffnet wird. Bei dieser Ausführungsform ist allerdings eine zusätzliche Wand als Prallschutz vorgesehen, die derart angeordnet ist, dass die von der Abblasbaugruppe weggeblasenen Beutelhälse gegen sie fliegen und von ihr durch den komplett geöffneten Spalt

in den Abzug abprallen. Dadurch ist es möglich, besonders große Verpackungsmaterialreste von der Abblasbaugruppe zuverlässig durch den komplett geöffneten Spalt in den Abzug zu transportieren.

Die erfindungsgemäße Abblasbaugruppe, dessen Verwendung in einer Verpackungsvorrichtung sowie ein Verfahren gemäß der Erfindung werden anhand der folgenden Figuren genauer erläutert. Dabei zeigen:
- Fig. 1: eine Kammerbandmaschine, in der die erfindungsgemäße Abblasbaugruppe anwendbar ist bzw. mit der sich das erfindungsgemäße Verfahren durchführen lässt,
- Fig. 2: eine Verpackungsvorrichtung mit der erfindungsgemäßen Abblasbaugruppe zum Beseitigen von Beutelhälsen, wobei die Abblasbaugruppe integral mit einem Widerlager ausbildet ist,
- Fig. 3: eine schematische Seitenansicht der Verpackungsvorrichtung aus Figur 2,
- Fig. 4: die erfindungsgemäße Abblasbaugruppe, die an einem Widerlager einer Siegelvorrichtung integral ausgebildet ist,
- Fig. 5: eine Seitenansicht der Fig. 4 im Schnitt A - A, wobei sich das Abblaselement in einer ersten Position befindet,
- Fig. 6: eine Seitenansicht der Fig. 4 im Schnitt A - A, wobei sich das Abblaselement in einer zweiten Position befindet, und
- Fig. 7a) - 7j): Verfahrensschritte gemäß der Erfindung, wobei in der gezeigten Verpackungsvorrichtung die erfindungsgemäße Abblasbaugruppe integral mit einem Widerlager ausgebildet ist.

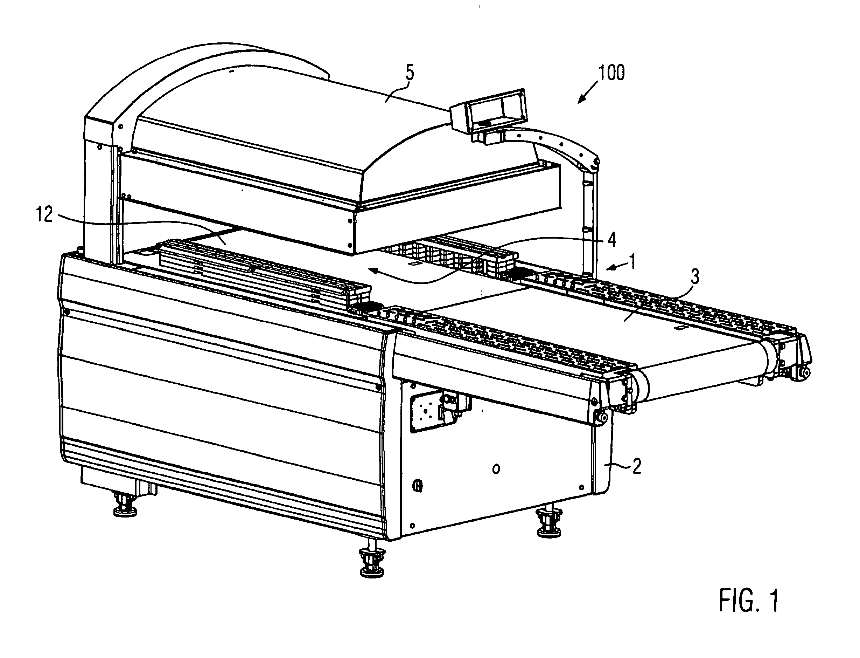

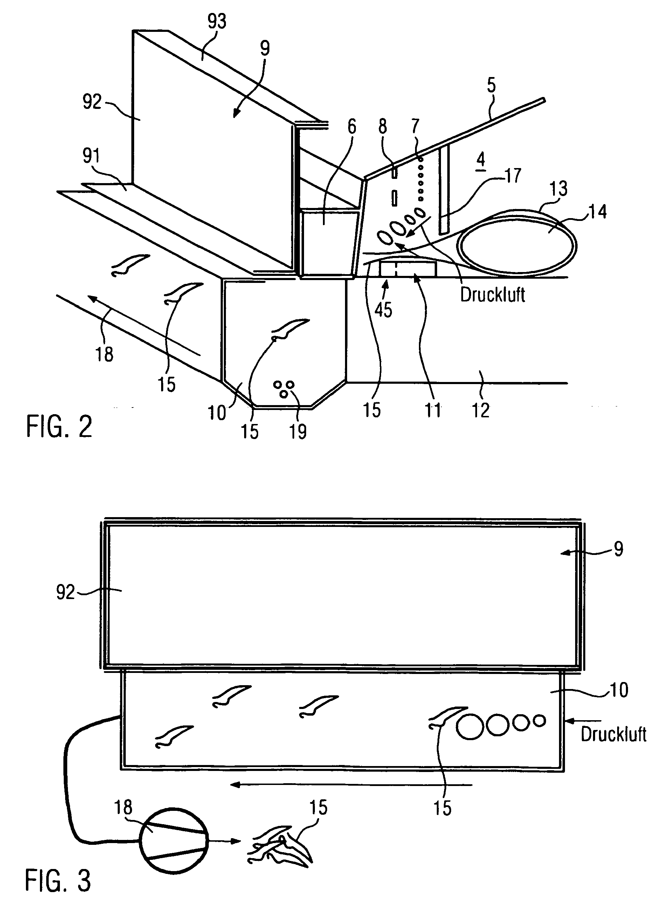

Die Fig. 1 zeigt eine schematische Ansicht einer Kammerbandmaschine 100 mit einem Förderband 1, einem Gestell 2, einem Auflegebereich 3, einer Kammer 4 und einem Deckel 5. Die Kammer 4 wird durch den Deckel 5 zusammen mit einem Unterteil 12 gebildet, wobei sich der Deckel 5 beispielsweise motorisch betrieben automatisch öffnet oder manuell öffnen lässt, um beispielsweise zu evakuierende bzw. zu versiegelnde Beutel 13 (siehe Fig. 2) aufzunehmen, die durch das Förderband 1 automatisch zugeführt werden, und der sich anschließend automatisch schließt, um die Kammer 4 zu bilden.

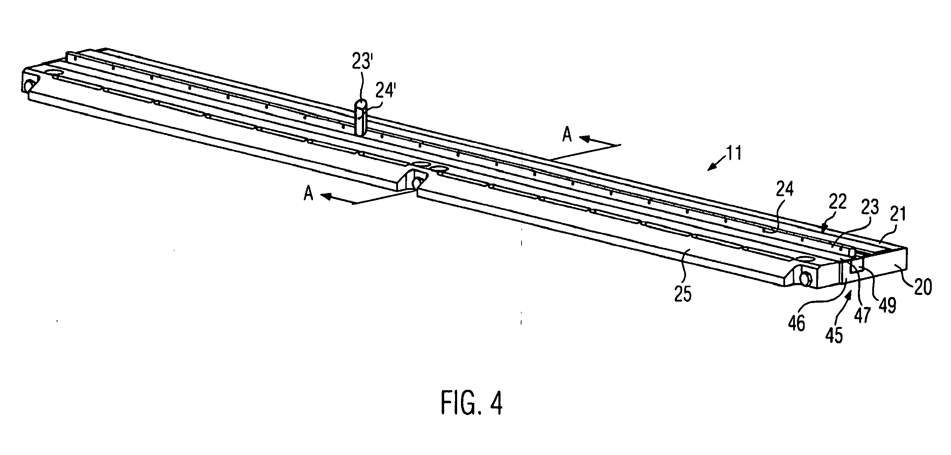

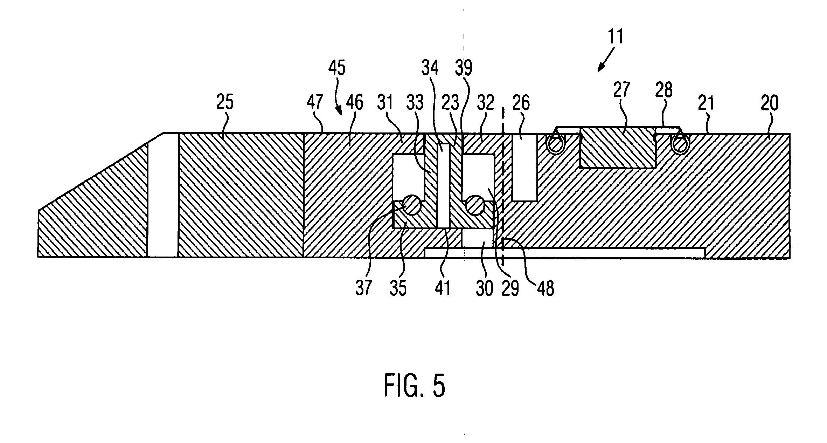

Die Fig. 2 zeigt einen schematischen Ausschnitt der Kammerbandmaschine 100. Der Deckel 5 ist mit einem Mitnehmer 6 versehen, der am unteren Rand des Deckels 5 vorgesehen ist und sich im Wesentlichen als Vierkantprofil in die Zeichenebene hinein bzw. aus ihr heraus über die gesamte Länge der Kammer 4 erstreckt. Der Deckel 5 bildet mit dem Unterteil 12 die Kammer 4. In der Kammer 4 ist der Beutel 13 vorgesehen, in dem sich ein Produkt 14 befindet. Der Beutel 13 weist einen Beutelhals 15 auf, der sich in der Kammer 4 in Richtung des Mitnehmers 6 erstreckt. An der Innenseite des Deckels 5 sind eine Siegelvorrichtung 7 und eine Schneidvorrichtung 8 vorgesehen, die sich im Bereich des Beutelhalses 15 in die Kammer 4 hinein erstrecken. Die Siegelvorrichtung 7 und die Schneidvorrichtung 8 wirken mit einem Widerlager 11 zusammen, das auf dem Unterteil 12 vorgesehen ist und sich über die gesamte Länge der Kammer 4 in die Zeichenebene hinein bzw. aus ihr heraus erstreckt. Neben dem Widerlager 11 ist schematisch die erfindungsgemäße Abblasbaugruppe 45 gezeigt. Das Widerlager 11 sowie die erfindungsgemäße Abblasbaugruppe 45 werden später, insbesondere anhand der Figuren 4 und 5, genauer beschrieben. Die Siegelvorrichtung 7 und die Schneidvorrichtung 8 sind gemeinsam bzw. unabhängig voneinander absenkbar.

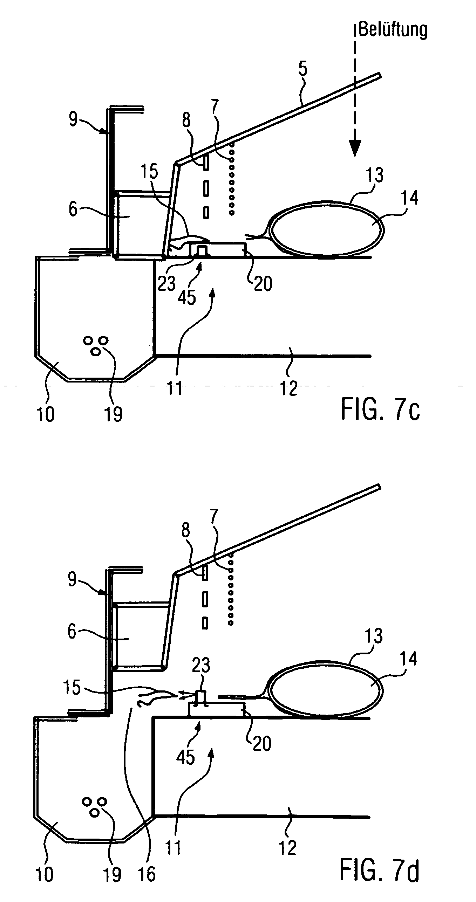

Weiterhin ist neben dem Unterteil 12 ein Abzug 10 vorgesehen, der als Absaugschacht ausgebildet ist und sich über die gesamte Länge der Kammer 4 in die Zeichenebene hinein bzw. aus ihr heraus erstreckt. Die Oberseite des Abzugs 10 befindet sich im Wesentlichen auf dem Niveau der Oberseite des Unterteils 12. In der Vorderansicht der Kammerbandmaschine ist im rechten oberen Bereich des Abzugs 10 ein Spalt 16 (siehe Fig. 7d - 7i) vorgesehen, der bei abgesenktem bzw. geschlossenem Deckel 5 durch die untere Fläche des Mitnehmers 6 verschlossen ist. Außerdem ist der Spalt 16 durch einen Schutzrahmen 9 verschlossen, der sich im Wesentlichen in die Zeichenebene hinein bzw. aus ihr heraus über die gesamte Länge der Kammer 4 erstreckt. Der Schutzrahmen 9 hat in der Fig. 2 die Form einer Treppenstufe von links unten nach rechts oben. Eine erste Schutzrahmenplatte 91 ist im Wesentlichen parallel zum Boden angeordnet und verschließt zum Teil den Spalt 16 (siehe Fig. 7d - 7i). Eine zweite Schutzrahmenplatte 92 schließt sich daran an und erstreckt sich im Wesentlichen orthogonal zum Boden nach oben. Daran anschließend erstreckt sich eine dritte Schutzrahmenplatte 93 am oberen Ende der zweiten Schutzrahmenplatte 92 im Wesentlichen parallel zum Boden nach rechts. Die erste Schutzrahmenplatte 91 befindet sich bei abgesenktem Deckel 5 auf demselben Niveau, wie die untere Fläche bzw. die untere Kante des Mitnehmers 6.

Weiterhin ist in der Fig. 2 eine Druckluftvorrichtung 17 vorgesehen. Diese ist optional vorgesehen, um zusätzlich zum durch die Abblasbaugruppe 45 erzeugten Druckluftstrom, wie es später beschrieben wird, Druckluft zum Beseitigen der abgeschnittenen Beutelhälse 15 zu liefern. Schließlich ist in der Fig. 2 eine Absaugvorrichtung 18 mittels einem durchgezogenen Pfeil im Abzug 10 dargestellt. Durch diese können die abgetrennten Beutelhälse 15 in den Abzug gesogen werden sowie entlang des Abzugs 10 abtransportiert werden. Für einen verbesserten Abtransport der Beutelhälse 15 aus dem Abzug 10 sind an der Vorderseite des Abzugs 10 Bohrungen 19 vorgesehen, sogenannte Fehlluftbohrungen, deren Funktion nachfolgend näher beschrieben wird. Die Bohrungen 19 sind nicht auf die gezeigte Form beschränkt, vielmehr kann eine einzige Bohrung 19 oder mehrere Bohrungen bzw. Öffnungen beliebiger Form vorgesehen sein. Für einen effektiven Abtransport der abgetrennten Beutelhälse 15 von der erfindungsgemäßen Abblasbaugruppe 45 ist das Vorsehen der Druckluftvorrichtung 17, der Absaugvorrichtung 18 sowie der Bohrungen 19 jedoch nicht zwingend notwendig.

Die Fig. 3 zeigt eine schematische Vorderansicht der Vorrichtung gemäß der Fig. 2. Gemäß der Fig. 3 ist die Absaugvorrichtung 18 außerhalb des Abzugs 10 angeordnet. Die Beutelhälse 15 werden in der Fig. 3 in Richtung des durchgezogenen Pfeils von der Absaugvorrichtung 18 aus dem Abzug 10 herausgesaugt. Alternativ zur Absaugvorrichtung 18 kann jedoch auch eine mit dem Abzug 10 funktional verbundene Abblasvorrichtung vorgesehen sein, um die Beutelhälse 15 mit Hilfe von Druckluft aus dem Abzug 10 herauszublasen. Durch die Bohrungen 19 kommt es auch ohne eine Abblasvorrichtung, sondern lediglich durch die Absaugvorrichtung 18 zur Bildung einer Luftströmung durch den Abzug 10.

In der Fig. 4 ist die erfindungsgemäße Abblasbaugruppe 45 integral in dem Widerlager 11 verbaut. Das Widerlager 11 umfasst eine Gegendruckplatte 20, auf der, wie später erläutert wird, ein Siegel- sowie ein Schneidvorgang stattfinden, um den Beutel 13 zu verschließen und den Beutelhals 15 abzutrennen.

Die Abblasbaugruppe 45 umfasst ein Gehäuse 46 mit einer Oberfläche 47, von der ein Abblaselement 22 hervorsteht. Gemäß der Fig. 4 ist das Abblaselement 22 eine über die gesamte Breite der Abblasbaugruppe 45 angeordnete Abblasleiste 23. Die Abblasleiste 23 umfasst äquidistant zueinander beabstandete Luftöffnungen 24, durch die Druckluft aus der Abblasleiste 23 strömbar ist. An der Abblasbaugruppe 45 ist ein Rampenabschnitt 25 befestigt, der an das Gehäuse 46 vornehmlich angeschraubt ist.

Die Fig. 4 zeigt auch einen Abblasstift 23' mit einer Luftöffnung 24'. Die erfindungsgemäße Abblasbaugruppe 45 kann alternativ zur Abblasleiste 23 zumindest einen, vornehmlich jedoch eine Gruppe von Abblasstiften 23', umfassen. Der Abblasstift 23' ist in der Gegendruckplatte 20 beweglich angeordnet. Bei einer Gruppe von Abblasstiften 23' können diese äquidistant über die Breite der Abblasbaugruppe 45 vorgesehen sein. Der Abblasstift 23' hat eine rotationssymmetrische Form. Ebenso umfasst der Abblasstift 23' eine nicht gezeigte Verdrehsicherung, welche dafür sorgt, dass sich dieser bei einer Bewegung zwischen der ersten und der zweiten Position nicht verdreht. Dadurch ist es möglich, eine gewünschte Orientierung der Luftöffnung 24' beizubehalten.

Schließlich zeigt die Fig. 4 eine Abdeckkappe 49, die seitlich am Gehäuse 46 lösbar befestigt ist. Durch Abnehmen der Abdeckkappe 49 kann ein Bediener die Abblasleiste 23 aus dem Führungsabschnitt 29 des Gehäuses 46, beispielsweise zum Reinigen, herausnehmen. Die Abdeckkappe 49 kann beidseitig am Gehäuse 46 vorgesehen sein.

Die Fig. 5 zeigt die erfindungsgemäße Abblasbaugruppe 45 im Schnitt A - A gemäß der Fig. 4. In der Fig. 5 befindet sich die Abblasleiste 23 in einer ersten Position, in der sie derart in dem Gehäuse 46 versenkt ist, dass sie mit der Oberfläche 47 des Gehäuses 46 bündig angeordnet ist. Neben dem Gehäuse 46 ist der Rampenabschnitt 25 angeordnet, welcher dafür sorgt, dass die abgetrennten Beutelhälse 15 von der Abblasbaugruppe sowie vom Widerlager 11 gut abtransportiert werden können und nicht dahinter auf dem Unterteil 12 der Verpackungsvorrichtung gemäß der Fig. 2 liegen bleiben.

Die Gegendruckplatte 20 der Fig. 5 umfasst eine Oberfläche 21 und des Weiteren eine Schneidöffnung 26 sowie ein daneben angeordnetes Siegelelement 27. Während des Schneidvorgangs, um die Beutelhälse 15 vom Beutel 13 abzutrennen, fährt die in der Figur 2 gezeigte Schneidvorrichtung 8 in die Schneidöffnung 26 hinein, um den überflüssigen Beutelhals 15 abzutrennen. Um das Produkt 14 im Beutel 13 einzuschließen, drückt die in der Figur 2 gezeigte Siegelvorrichtung von oben auf das Siegelelement 27. Auf dem Siegelelement 27 ist ein Band 28, vorzugsweise ein Teflonband, angeordnet. Durch das Band 28 ist es möglich, zu verhindern, dass das Verpackungsmaterial auf dem Widerlager 11 durch das Versiegeln kleben bleibt.

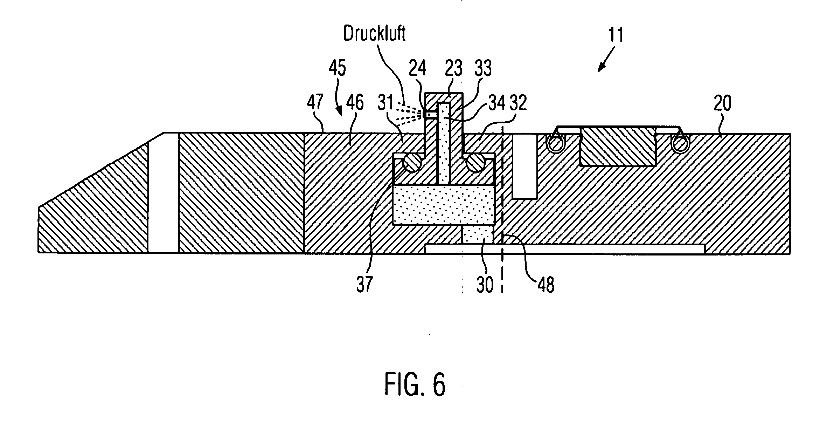

Gemäß der Fig. 5 ist die Abblasleiste 23 in einem Führungsabschnitt 29 des Gehäuses 46 angeordnet. Außerdem umfasst das Gegendruckplatte Gehäuse 46 einen Druckluftanschluss 30, durch den Druckluft in den Führungsabschnitt 29 zuleitbar ist. Auf der Oberseite des Gehäuses 46 sind ein erster und ein zweiter Anschlag 31, 32 ausgebildet, um die Abblasleiste 23 im Führungsabschnitt 29 zu halten, wenn sie sich zwischen der ersten und einer zweiten Position (siehe Fig. 6) bewegt.

Gemäß der Fig. 5 umfasst die Abblasleiste 23 einen vertikal ausgerichteten Schenkel 33 mit einem darin ausgebildeten Kanal 34. In der Abblasleiste 23 ist außerdem ein Einlass 41 vorgesehen, der in den Kanal 34 führt. Vom vertikalen Schenkel 33 erstreckt sich seitlich ein Flansch 35, der in der Fig. 5 im Schnitt dargestellt ist. Der vertikale Schenkel 33 mit dem Kanal 34 sowie der sich vom vertikalen Schenkel 33 erstreckende Flansch 35 können beispielsweise durch einen Biegeprozess hergestellt werden.

Auf dem Flansch 35 ist ein Dichtelement 37 als Rundschnurdichtung angeordnet, welche aus der Draufsicht gesehen ringsherum auf dem Flansch 35 verläuft, sodass sie den Führungsabschnitt 29 abdichtet, wenn die Abblasleiste 23 in der zweiten Position ist, in welcher der Flansch 35 nach oben gegen den ersten und den zweiten Anschlag 31, 32 drückt.

Das Dichtelement 37 verhindert, dass Druckluft aus dem Gehäuse 46 ausdringt. Außerdem kann damit verhindert werden, dass es zu einem abrupten, lauten Stoß kommt, wenn die Abblasleiste 23 aus der in der Fig. 5 gezeigten ersten Position in die in der Fig. 6 gezeigten zweiten Position verfährt.

Ein oberer Abschnitt des vertikalen Schenkels 33 ist in einer Öffnung 39 des Gehäuses 46 angeordnet. Der vertikale Schenkel 33 der Abblasleiste 23 kann durch die Öffnung 39 aus der in der Fig. 5 gezeigten Position in die Position der nachfolgend beschriebenen Fig. 6 verfahren.

Ebenso gut könnte die Fig. 5 eine Schnittdarstellung durch den in der Fig. 4 als Alternative zur Abblasleiste 23 gezeigten Abblasstift 23' sein. Falls mehrere Abblasstifte 23' vorgesehen sind, können diese synchron durch die Öffnung 39 des Gehäuses 46 zwischen der ersten und der anschließend erläuterten zweiten Position verfahren. Dabei ist für jeden der Abblasstifte 23' jeweils eine zylindrische Öffnung 39 in dem Gehäuse 46 ausgebildet.

Die Fig. 6 zeigt die Schnittansicht A - A der Fig. 4, wobei sich die Abblasleiste 23, bzw. der Abblasstift 23', in der zuvor erwähnten zweiten Position befindet, in der der vertikale Schenkel 33 über die Oberfläche 47 des Gehäuses 46 hinausragt. In dieser Position der Abblasleiste 23 befindet sich im Führungsabschnitt sowie im Kanal 34 der Abblasleiste 23 Druckluft, welche gepunktet dargestellt ist. Die Druckluft wurde durch den Druckanschluss 30 in den Führungsabschnitt 29 und von dort durch den Einlass 41 in den Kanal 34 eingeleitet.

In der Fig. 6 drückt das Dichtelement 37 jeweils gegen eine Unterseite des ersten sowie des zweiten Anschlags 31, 32. Spätestens wenn sich die Abblasleiste 23 in der zweiten Position gemäß der Fig. 6 befindet, verlässt die Druckluft den Kanal 34 durch die in der Fig. 4 bereits gezeigten Luftöffnungen 24, 24'. Ein oder mehrere über dem Widerlager 11 abgetrennte Beutelhälse 15 können dadurch zunächst durch die Abblasleiste 23 über die Abblasbaugruppe 45 angehoben werden, um schließlich durch die aus den Luftöffnungen 24 strömende Druckluft weggeblasen zu werden.

Im Folgenden wird der Betrieb der erfindungsgemäßen Abblasbaugruppe 45 beschrieben.

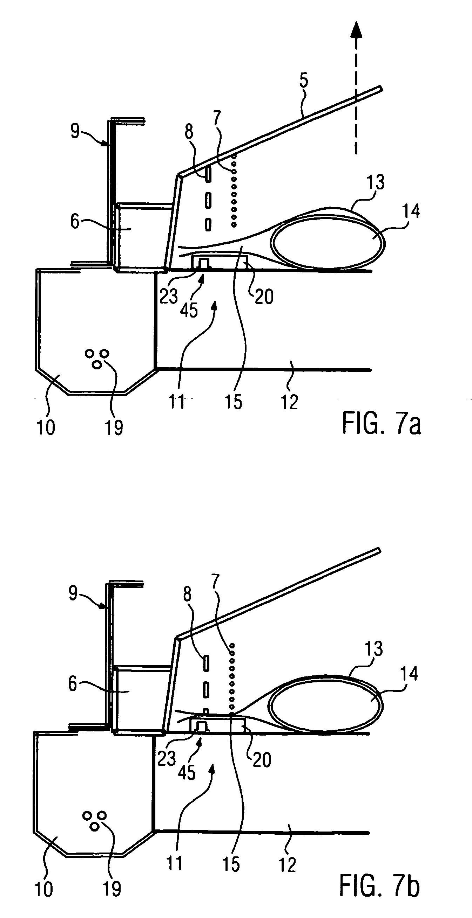

Die Fig. 7a) - 7j) zeigen, wie die erfindungsgemäße Abblasbaugruppe 45 zum Einsatz kommen kann. Dabei wird auf die Vorrichtung gemäß der Figur 2 Bezug genommen.

Wie in der Fig. 7a gezeigt ist, befindet sich der Deckel 5 in einer abgesenkten Position. Die Kammer 4 wird in diesem Schritt evakuiert (gestrichelter Pfeil). Abblasleiste 23 befindet sich in der ersten Position, in welcher es in dem Gehäuse 46 versenkt ist.

Gemäß der Fig. 7b werden die Siegelvorrichtung 7 und die Schneidvorrichtung 8 abgesenkt und wirken mit dem Widerlager 11 zusammen. Der Beutel 13 wird versiegelt und im produktfernen Bereich des Beutelhalses 15 geschnitten. Auch während dieses Schrittes ist die Abblasleiste 23 in dem Gehäuse 46 versenkt.

Gemäß der Fig. 7c liegt der abgetrennte Beutelhals 15 auf der Abblasbaugruppe 45 auf. Die Kammer 4 wird belüftet (gestrichelter Pfeil) und das im Beutel 13 versiegelte Produkt 14 ist bereit zum Abtransport. In der Fig. 7c befindet sich die schematisch dargestellte Abblasleiste 23 immer noch in der ersten Position, in welcher sie in dem Gehäuse 46 versenkt ist.

In der Fig. 7d ist der Deckel 5 zusammen mit dem Mitnehmer 6 und der Siegelvorrichtung 7 sowie der Schneidvorrichtung 8 angehoben. Der Spalt 16 öffnet sich und weist eine erste Öffnungsweite auf. Ab einer vorbestimmten Öffnungsweite des Spaltes 16 wird die erfindungsgemäße Abblasbaugruppe 45 mit Druckluft beaufschlagt, so dass sich die Abblasleiste 23 in die zweite Position bewegt, in der sie aus dem Gehäuse 46 herausragt. Die Druckluft, welche zum Herausfahren der Abblasleiste 23 aus der in der Fig. 7c gezeigten ersten Position in die in der Fig. 7d gezeigte zweite Position verwendet wurde, gelangt durch den Einlass 41 in den Kanal 34 und strömt aus den Luftöffnungen 24 aus (siehe Figur 6), um den abgetrennten Beutelhals 15 durch den geöffneten Spalt 16 in den Abzug 10 zu befördern. Zusätzlich zu der aus den Luftöffnungen 24 geströmten Druckluft werden insbesondere kleine bzw. kurze Beutelhälse 15 durch die von der Absaugvorrichtung 18 (siehe Fig. 3) erzeugte Sogwirkung in den Abzug 10 gesaugt. Die Sogwirkung wird durch den schmalen Spalt 16 mit der ersten Öffnungsweite verstärkt.

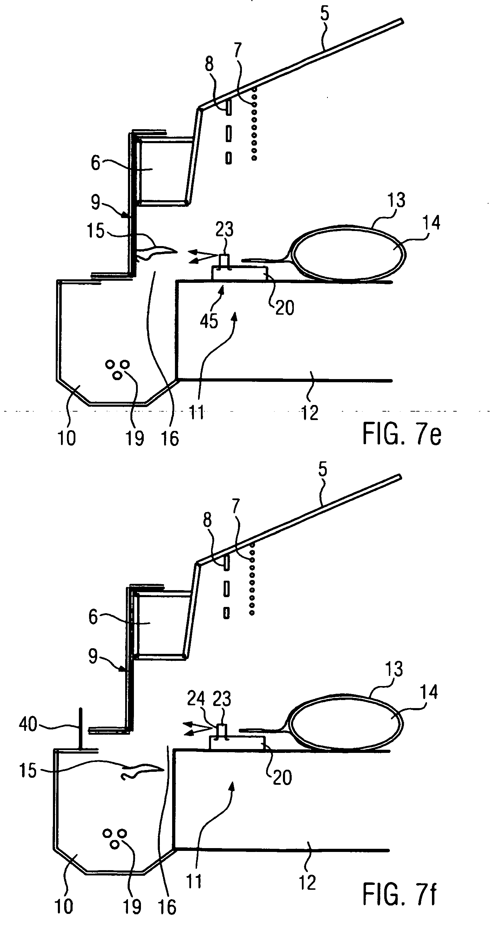

Gemäß der Fig. 7e ist der Deckel 5 in einer ersten angehobenen Position, bei der die obere Fläche des Mitnehmers 6 in Kontakt mit der Innenfläche der dritten Schutzrahmenplatte 93 (siehe Fig. 2) des Schutzrahmens 9 steht, die erste Schutzrahmenplatte 91 (siehe Fig. 2) aber noch in Kontakt mit der oberen Fläche des Abzugs 10 steht und einen Teil des Spaltes 16 verschließt. Die Beutelhälse 15 werden weiterhin durch die aus den Luftöffnungen 24 strömende Druckluft in den Abzug 10 geblasen, wobei sie teilweise von der zweiten Schutzrahmenplatte 92 in den Abzug 10 abprallen.

Wie es durch die Fig. 7f gezeigt wird, wird der Deckel 5 weiter angehoben und der Schutzrahmen 9 wird durch die formschlüssige Verbindung zwischen dem Mitnehmer 6 und der dritten Schutzrahmenplatte 93 (siehe Fig. 2) ebenfalls mit angehoben. Auf diese Weise vergrößert sich der Spalt 16 auf eine zweite Öffnungsweite, in der er komplett geöffnet ist. Es können nun auch größere bzw. längere Beutelhälse 15 mittels der aus dem Widerlager 11 strömenden Druckluft durch den Spalt 16 in den Abzug 10 geblasen werden. Damit die Beutelhälse 15 trotz Anheben des Rahmens 9 nicht über den Spalt hinweggeblasen werden, ist auf dem Abzug 10 eine Wand 40 als Prallschutz vorgesehen. Von dieser können die Beutelhälse 15 in den Abzug 10 abgeleitet werden. Lange Beutelhälse 15 stehen üblicherweise schon vor der Vergrößerung des Spalts 16 über diesen hinaus bzw. stehen am Schutzrahmen 9 an.

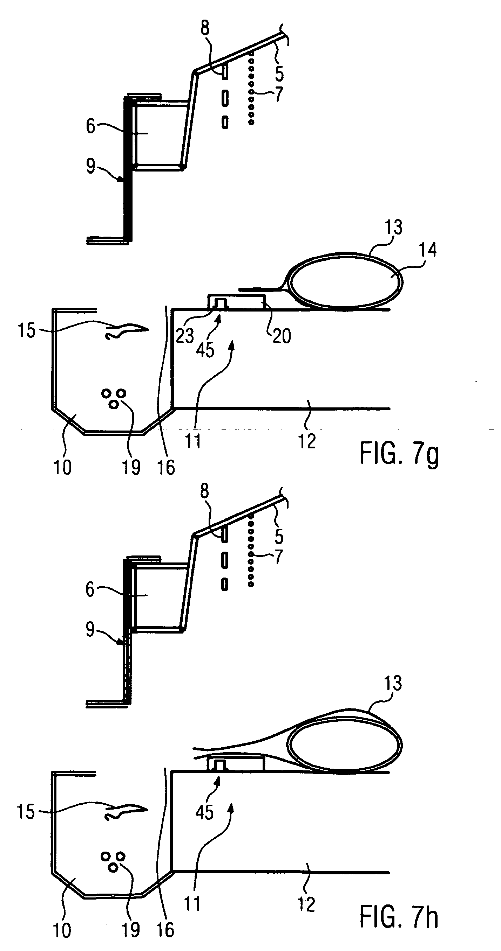

In der Fig. 7g hat der Deckel 5 seine oberste Position erreicht, wobei der Abzug 10 bzw. der Spalt 16 vollständig geöffnet ist. Große Beutelhälse 15 können aufgrund der Schwerkraft und der oben beschriebenen Sogwirkung in den Abzug 10 fallen und anschließend abtransportiert werden. Durch Abschalten der Druckluft kehrt die Abblasleiste 23 in die erste Position zurück.

Gemäß der Fig. 7h werden die während der vorigen Verfahrensschritte gezeigten Produkte 14 abtransportiert und neue zu versiegelnde mit Produkten 14 befüllte Beutel 13 sind in die Kammer 4 befördert worden.

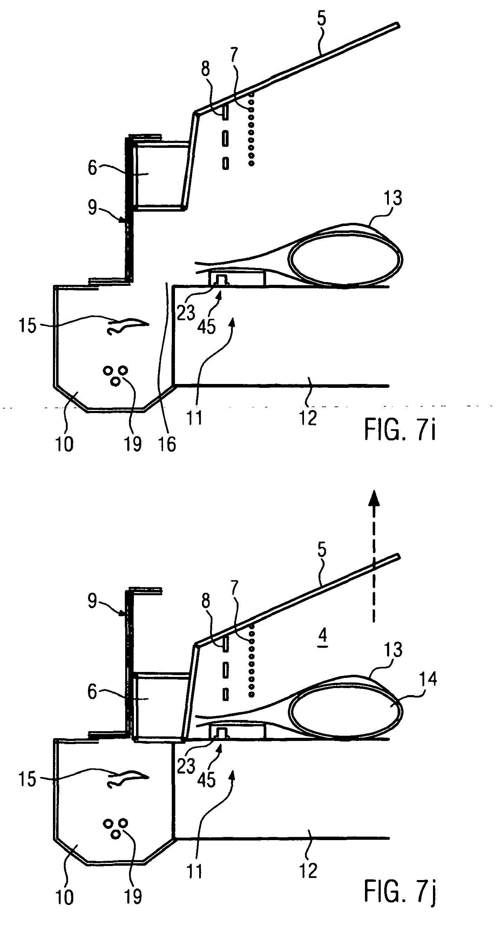

In der Fig. 7i schließt sich der Deckel 5 wieder und der Schutzrahmen 9 bzw. die erste Schutzrahmenplatte 91 (siehe Fig. 2) verschließt einen Teil des Spalts 16. Der Spalt 16 weist nun wieder seine erste Öffnungsweite auf. Die abgetrennten Beutelhälse 15, die sich im Abzug 10 befinden, werden abgesaugt bzw. druckluftunterstützt weggeblasen.

In der Fig. 7j verschließen der Schutzrahmen 9 und der Deckel 5 den Spalt 16 vollständig. Die Vorrichtung befindet sich wieder in ihrer Ausgangsstellung (siehe Fig. 7a). Das Verfahren beginnt von Neuem mit der Evakuierung der Kammer 4.

Die erfindungsgemäße Abblasbaugruppe 45 lässt sich in unterschiedlichen Verpackungsvorrichtungen verwenden und ist nicht auf die zuvor beschriebene Kammerbandmaschine beschränkt. Die Abblasbaugruppe 45 lässt sich außerdem ohne großen Aufwand vorteilhaft in einem Widerlager einer Siegelvorrichtung integrieren.

## Patentansprüche

1. Abblasbaugruppe (45) für eine Siegeleinheit (7) einer Verpackungsvorrichtung (100), umfassend ein Gehäuse (46) und mindestens ein Abblaselement (22), das relativ zum Gehäuse (46) zwischen einer ersten Position, in der es zumindest teilweise in dem Gehäuse (46) versenkt ist, und einer zweiten Position bewegbar ist, in der es zumindest teilweise über eine Oberfläche (47) des Gehäuses (46) hinausragt.

2. Abblasbaugruppe nach Anspruch 1, **dadurch gekennzeichnet, dass** das Abblaselement (22) eine Abblasleiste (23) oder wenigstens einen Abblasstift (23') umfasst.

3. Abblasbaugruppe nach Anspruch 1 oder 2, **dadurch gekennzeichnet, dass** das Abblaselement (22) bündig mit der Oberfläche (47) des Gehäuses (46) angeordnet ist, wenn es sich in der ersten Position befindet.

4. Abblasbaugruppe nach einem der vorigen Ansprüche, **dadurch gekennzeichnet, dass** das Abblaselement (22) relativ zur Oberfläche (47) des Gehäuses (46) orthogonal verschiebbar ist.

5. Abblasbaugruppe nach einem der vorigen Ansprüche, **dadurch gekennzeichnet, dass** in dem Gehäuse (46) ein Führungsabschnitt (29) ausgebildet ist, in dem das Abblaselement (22) beweglich angeordnet ist.

6. Abblasbaugruppe nach Anspruch 5, **dadurch gekennzeichnet, dass** das Gehäuse (46) einen Druckluftanschluss (30) umfasst, durch den Druckluft in den Führungsabschnitt (29) zuleitbar ist.

7. Abblasbaugruppe nach Anspruch 5 oder 6, **dadurch gekennzeichnet, dass** der Führungsabschnitt (29) eine Öffnung (39) aufweist, durch die das Abblaselement (22) hindurchragt, wenn es sich in der zweiten Position befindet.

8. Abblasbaugruppe nach einem der vorigen Ansprüche, **dadurch gekennzeichnet, dass** das Gehäuse (46) mindestens einen Anschlag (32, 33) umfasst, der das Abblaselement (22) an das Gehäuse (46) hält, wenn sich das Abblaselement (22) in der zweiten Position befindet.

9. Abblasbaugruppe nach einem der vorigen Ansprüche, **dadurch gekennzeichnet, dass** das Abblaselement (22) einen Einlass (41) aufweist, durch den Luft in einen in dem Abblaselement (22) vorgesehenen Kanal (34) einleitbar ist.

10. Abblasbaugruppe nach Anspruch 9, **dadurch gekennzeichnet, dass** eine Unterseite des Abblaselements (22) eine größere Fläche aufweist als der Einlass (41).

11. Abblasbaugruppe nach einem der vorigen Ansprüche, **dadurch gekennzeichnet, dass** das Abblaselement (22) Luftöffnungen (24) umfasst, durch die Luft aus dem Abblaselement (22) strömbar ist.

12. Abblasbaugruppe nach einem der vorigen Ansprüche, **dadurch gekennzeichnet, dass** das Abblaselement (22) mindestens ein Dichtelement (37) aufweist, um einen abrupten Stoß des Abblaselements (22) gegen das Gehäuse (46) zu verhindern.

13. Widerlager (11) für eine Siegeleinheit (7) einer Verpackungsvorrichtung (100), umfassend eine Abblasbaugruppe (45) nach einem der vorigen Ansprüche, wobei das Gehäuse (46) der Abblasbaugruppe (45) integral mit einer Gegendruckplatte (20) des Widerlagers (11) ausgebildet ist.

14. Verfahren zum Beseitigen eines überschüssigen Verpackungsmaterials (15) von einer Abblasbaugruppe (45), die für eine in einer Verpackungsvorrichtung (100) vorgesehenen Siegeleinheit (7) einsetzbar ist, welche ein Gehäuse (46) mit einem darin beweglich angeordneten Abblaselement (22) umfasst, wobei das Abblaselement (22) mit Druckluft beaufschlagt wird, um relativ zum Gehäuse (46) aus einer ersten Position, in der es zumindest teilweise in dem Gehäuse (46) versenkt ist, in eine zweite Position zu verfahren, in der es zumindest teilweise über eine Oberfläche (47) des Gehäuses (46) ragt, so dass es das überschüssige Verpackungsmaterial (15) anhebt, und wobei die Druckluft zumindest teilweise durch in dem Abblaselement (22) vorgesehene Luftöffnungen (24) ausgeströmt wird, um das angehobene überschüssige Verpackungsmaterial (15) von der Abblasbaugruppe (45) wegzublasen.

15. Verfahren nach Anspruch 14, **dadurch gekennzeichnet, dass** das Abblaselement (22) mit Druckluft beaufschlagt wird, während oder nachdem sich ein Deckel (5) der Verpackungsvorrichtung (100) aus einer geschlossenen Lage in eine offene Lage bewegt, um einen Spalt (16) eines Abzugs (10) teilweise zu öffnen.

16. Verfahren nach Anspruch 15, **dadurch gekennzeichnet, dass** das Abblaselement (22) höchstens bis zu einem Zeitpunkt mit Druckluft beaufschlagt wird, zu welchem der Deckel (5) mit einem Rahmen (9) der Verpackungsvorrichtung (100) in Eingriff gerät, um diesen anzuheben, so dass der Spalt (16) komplett geöffnet wird.

## Claims

1. Blowing assembly (45) for a sealing unit (7) of a packaging device (100) comprising a housing (46) and at least one blowing element (22) which is movable relative to said housing (46) between a first position in which it is lowered at least partially into said housing (46), and a second position in which it at least partially projects above a surface (47) of said housing (46).

2. Blowing assembly according to claim 1 **characterized in that** said blowing element (22) comprises a blowing rail (23) or at least a blowing pin (23').

3. Blowing assembly according to claim 1 or 2, **characterized in that** said blowing element (22) is arranged flush with said surface (47) of said housing (46) when it is in said first position.

4. Blowing assembly according to one of the previous claims, **characterized in that** said blowing element (22) is orthogonally movable relative to said surface (47) of said housing (46).

5. Blowing assembly according to one of the previous claims, **characterized in that** in said housing (46), a guide section (29) is formed in which said blowing element (22) is movably arranged.

6. Blowing assembly according to claim 5 **characterized in that** said housing (46) comprises a compressed air port (30) via which compressed air can be supplied into said guide section (29).

7. Blowing assembly according to claim 5 or 6, **characterized in that** said guide section (29) comprises an aperture (39) through which said blowing element (22) protrudes when it is in said second position.

8. Blowing assembly according to one of the previous claims **characterized in that** said housing (46) comprises at least one stop (32, 33) which holds said blowing element (22) at said housing (46) when said blowing element (22) is in said second position.

9. Blowing assembly according to one of the previous claims, **characterized in that** said blowing element (22) comprises an inlet (41) via which air can be introduced into a channel (34) provided in said blowing element (22).

10. Blowing assembly according to claim 9 **characterized in that** an under side of said blowing element (22) has a larger area that said inlet (41).

11. Blowing assembly according to one of the previous claims, **characterized in that** said blowing element (22) comprises air apertures (24) through which air can flow out from said blowing element (22).

12. Blowing assembly according to one of the previous claims, **characterized in that** said blowing element (22) comprises at least one sealing element (37) for preventing sudden impact of said blowing element (22) against said housing (46).

13. Abutment (11) for a sealing unit (7) of a packaging device (100), comprising a blowing assembly (45) according to one of the previous claims, where said housing (46) of said blowing assembly (45) is integrally formed with a counter-pressure plate (20) of said abutment (11).

14. Method for removing excess packing material (15) from a blowing assembly (45) that can be used for a sealing unit (7) being provided in a packaging device (100) and comprising a housing (46) with a blowing element (22) which is movably arranged therein, where said blowing element (22) is impinged by compressed air to be moved relative to said housing (46) from a first position, in which it is lowered at least partially into said housing (46), to a second position, in which it at least partially projects above a surface (47) of said housing (46), so that it raises the excess packaging material (15), and where said compressed air is flowed at least partially through air apertures (24) provided in said blowing element (22) to blow away said raised excess packaging material (15) from said blowing assembly (45).

15. Method according to claim 14, **characterized in that** said blowing element (22) is impinged by compressed air during or after a cover (5) of said packaging device (100) moves from a closed position to an open position in order to at least partially open a gap (16) of an extractor (10).

16. Method according to claim 15, **characterized in that** said blowing element (22) is impinged by compressed air at most until a point in time, at which said cover (5) engages with a frame (9) of said packaging device (100) for lifting the latter, so that said gap (16) is fully opened.

## Revendications

1. Groupe de soufflage (45) pour une unité de scellage (7) d'un dispositif d'emballage (100), comprenant un carter (46) et au moins un élément de soufflage (22), qui peut être déplacé par rapport au carter (46), entre une première position dans laquelle il est au moins partiellement escamoté dans le carter (46), et une deuxième position dans laquelle il fait saillie au moins partiellement à l'extérieur d'une surface extérieure (47) du carter (46).

2. Groupe de soufflage selon la revendication 1, **caractérisé en ce que** l'élément de soufflage (22) comprend une barre de soufflage (23) ou au moins un stylet de soufflage (23').

3. Groupe de soufflage selon la revendication 1 ou la revendication 2, **caractérisé en ce que** l'élément de soufflage (22) est agencé de manière à arriver au ras de la surface extérieure (47) du carter (46) lorsqu'il se trouve dans la première position.

4. Groupe de soufflage selon l'une des revendications précédentes, **caractérisé en ce que** l'élément de soufflage (22) peut coulisser de manière orthogonale à la surface extérieure (47) du carter (46).

5. Groupe de soufflage selon l'une des revendications précédentes, **caractérisé en ce que** dans le carter (46) est formé un tronçon de guidage (29) dans lequel est agencé de manière déplaçable, l'élément de soufflage (22).

6. Groupe de soufflage selon la revendication 5, **caractérisé en ce que** le carter (46) comporte un raccordement de branchement d'air comprimé (30), par l'intermédiaire duquel de l'air comprimé peut être envoyé dans le tronçon de guidage (29).

7. Groupe de soufflage selon la revendication 5 ou la revendication 6, **caractérisé en ce que** le tronçon de guidage (29) présente une ouverture (39) à travers laquelle fait saillie l'élément de soufflage (22) lorsqu'il se trouve dans la deuxième position.

8. Groupe de soufflage selon l'une des revendications précédentes, **caractérisé en ce que** le carter (46) comprend au moins une butée (32, 33), qui maintient l'élément de soufflage (22) contre le carter (46), lorsque l'élément de soufflage (22) se trouve dans la deuxième position.

9. Groupe de soufflage selon l'une des revendications précédentes, **caractérisé en ce que** l'élément de soufflage (22) présente une entrée (41) à travers laquelle de l'air peut être envoyé dans un canal (34) prévu dans l'élément de soufflage (22).

10. Groupe de soufflage selon la revendication 9, **caractérisé en ce qu'**un côté inférieur de l'élément de soufflage (22) présente une surface plus grande que l'entrée (41).

11. Groupe de soufflage selon l'une des revendications précédentes, **caractérisé en ce que** l'élément de soufflage (22) comporte des ouvertures d'air (24) à travers lesquelles peut s'écouler de l'air hors de l'élément de soufflage (22).

12. Groupe de soufflage selon l'une des revendications précédentes, **caractérisé en ce que** l'élément de soufflage (22) présente au moins un élément d'étanchéité (37) pour empêcher un choc abrupt de l'élément de soufflage (22) contre le carter (46).

13. Sommier d'appui (11) pour une unité de scellage (7) d'un dispositif d'emballage (100), comprenant un groupe de soufflage (45) selon l'une des revendications précédentes, le carter (46) du groupe de soufflage (45) étant réalisé de manière intégrale avec une plaque de pression conjuguée (20) du sommier d'appui (11).

14. Procédé pour éliminer du matériau d'emballage (15) en excédent par un groupe de soufflage (45), qui peut être mis en oeuvre pour une unité de scellage (7) prévue dans un dispositif d'emballage (100), et comporte un carter (46) dans lequel est agencé de manière déplaçable un élément de soufflage (22), procédé d'après lequel on alimente l'élément de soufflage (22) en air comprimé, pour le déplacer par rapport au carter (46), d'une première position dans laquelle il est au moins partiellement escamoté dans le carter (46), à une deuxième position dans laquelle il fait saillie au moins partiellement à l'extérieur d'une surface extérieure (47) du carter (46), de sorte qu'il soulève le matériau d'emballage (15) en excédent,
et d'après lequel l'air comprimé s'écoule au moins en partie hors d'ouvertures d'air (24) prévues dans l'élément de soufflage (22), en vue d'évacuer par soufflage, le matériau d'emballage (15) en excédent, du groupe de soufflage (45).

15. Procédé selon la revendication 14, **caractérisé en ce que** l'on alimente l'élément de soufflage (22) en air comprimé, pendant ou après qu'un couvercle (5) du dispositif d'emballage (100) se déplace d'une position fermée à une position ouverte, pour ouvrir partiellement une fente (16) d'un évacuateur (10).

16. Procédé selon la revendication 15, **caractérisé en ce que** l'élément de soufflage (22) est alimenté en air comprimé, tout au plus jusqu'à un instant où le couvercle (5) vient en prise avec un cadre (9) du dispositif d'emballage (100), pour soulever celui-ci, en produisant ainsi l'ouverture complète de la fente (16).
